Europäisches Patentamt

European Patent Office

Office européen des brevets

(11) Veröffentlichungsnummer: **0 281 818**
**A1**

# (12) EUROPÄISCHE PATENTANMELDUNG

(21) Anmeldenummer: 88102418.6

(22) Anmeldetag: 19.02.88

(51) Int. Cl.4: **H02K 1/18 , H02K 5/22 , H02K 5/128**

(30) Priorität: 03.03.87 DE 3706787

(43) Veröffentlichungstag der Anmeldung:
14.09.88 Patentblatt 88/37

(84) Benannte Vertragsstaaten:
CH DE FR GB IT LI

(71) Anmelder: **Halm, Richard**
**Silcherstrasse 54**
**D-7066 Baltmannsweiler(DE)**

(72) Erfinder: **Halm, Richard**
**Silcherstrasse 54**
**D-7066 Baltmannsweiler(DE)**

(74) Vertreter: **Patentanwälte Phys. Bartels**
**Dipl.-Ing. Fink Dr.-Ing. Held**
**Lange Strasse 51**
**D-7000 Stuttgart 1(DE)**

(54) Elektromotor, insbesondere Spaltrohrmotor.

(57) Ein Elektromotor, insbesondere Spaltrohrmotor, hat ein Statorblechpaket (1), eine das Statorblechpaket (1) durchsetzende und in einen Gießharzkörper (3) eingebettete Wicklung (2) und ein Anschlußgehäuse (22) zur Unterbringung eines motorbetriebenen Treibkörpers (21), das am Gießharzkörper (3) radial und axial ansteht und mittels Verbindungsmitteln (25) mit dem Statorblechpaket (1) verbunden ist, das den Gießharzkörper (3) mindestens teilweise radial überragt. Um ein rationelles Gießen des Gießharzkörpers (3) mit unkomplizierten und billigen Gießformen zu ermöglichen und Gießharz einzusparen, sind die Verbindungsmittel (25) in den den Gießharzkörper (3) überragenden Teilen des Statorblechpaketes (1) untergebracht.

Fig.1

## Elektromtor, insbesondere Spaltrohrmotor

Die Erfindung bezieht sich auf einen Elektromotor entsprechend dem Oberbegriff des Anspruches 1.

Bei einem bekannten Elektromotor der vorgenannten Art sind die Verbindungsmittel in dem Teil des Statorbleches untergebracht, der vom Gießharzkörper umgeben ist. Beim Gießen des Gießharzkörpers dringt Gießharz in die zur Aufnahme der Verbindungsmittel vorgesehenen Bohrungen ein. Wenn diese Bohrungen nicht anschließend an den Gießvorgang nachbearbeitet werden sollen, muß in diese Bohrungen ein Kern eingelegt und abgedichtet werden (US-PS 1 897 784).

Der vorliegenden Erfindung liegt ausgehend von diesem Stand der Technik die Aufgabe zugrunde, ein rationelles Gießen des Gießharzkörpers mit unkomplizierten und billigen Gießformen zu ermöglichen und Gießharz einzusparen. Diese Aufgabe wird durch die Merkmale im Kennzeichnungsteil des Anspruches 1 erfindungsgemäß gelöst. Da die die Verbindungsmittel aufnehmenden Bohrungen in den den Gießharzkörper überragenden Teile außerhalb dieses Gießharzkörpers liegen, kann dieser mit unkomplizierten und billigen Gießformen mit gießtechnischen und fertigungstechnischen Vorteilen rationell gegossen werden. Da nur die Wicklung von Gießharzkörper umgeben sein muß, wird teures Gießharz eingespart. Die Verbindungsmittel sind auf einem verhältnismäßig großen Durchmesser anordenbar. Außen liegende Verbindungsmittel erlauben die Anwendung eines verhältnismäßig großen Zentrierdurchmessers für das Pumpengehäuse und die Anwendung eines Laufrades mit entsprechend großem Durchmesser.

Die Merkmale der Anspüche 2 und 3 betreffen bevorzugte Weiterbildungen der Erfindung.

Bei Anwendung der Merkmale des Anspruches 4 brauchen nur die für die Unterbringung der Verbindungsmittel dienenden Teile des Statorblechpaketes über den Gießharzkörper überzustehen.

Weitere Vorteile ergeben sich aus der Beschreibung und der Zeichnung. In dieser sind zwei Spaltrohrmotorpumpen als Ausführungsbeispiele des Gegenstandes der Erfindung schematisch dargestellt. Es zeigen

Fig. 1 einen Schnitt längs der Linie B'BAA' in Fig. 2 durch ein erstes Ausführungsbeispiel,

Fig. 2 eine Ansicht in Richtung des Pfeiles A, auf der linken Seite mit Lagerdeckel und auf der rechten Seite ohne Lagerdeckel und teilweise geschnitten dargestellt,

Fig. 3 eine Draufsicht in Richtung des Pfeiles B in Fig. 1 ohne Anschlußdeckel,

Fig. 4 einen Teilschnitt nach Linie AA' in Fig. 2,

Fig. 5 einen Teilschnitt nach Linie BB' in Fig. 2,

Fig. 6 eine Seitenansicht mit Teilschnitt eines zweiten Ausführungsbeispiels,

Fig. 7 eine Ansicht in Richtung des Pfeiles C in Fig. 6.

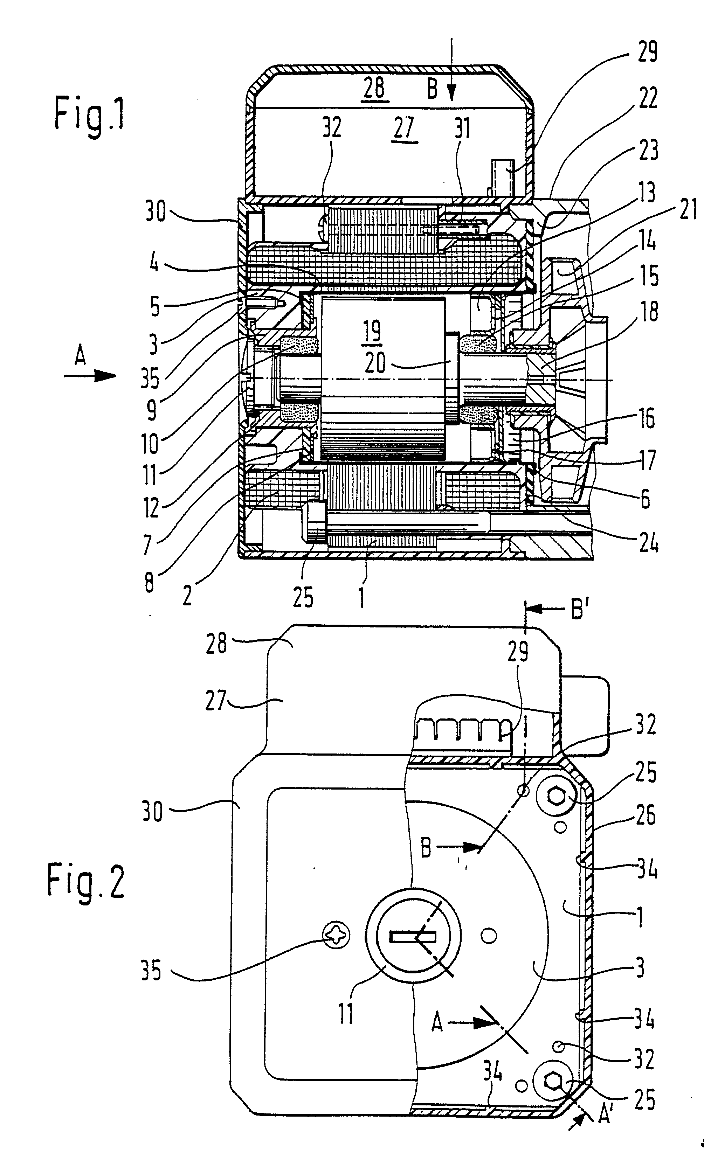

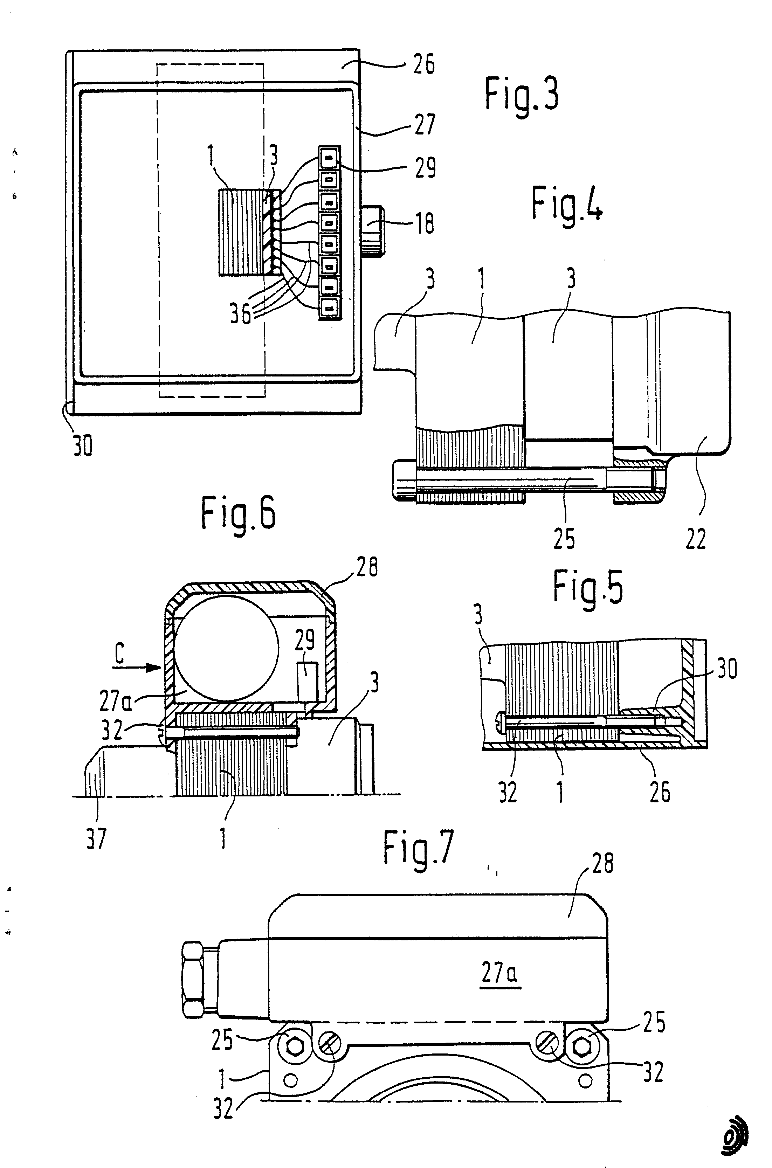

Ein Statorblechpaket 1 eines Spaltrohrmotors nimmt eine Wicklung auf, die beidseitig übersteht und in einen Gießharzkörper 3 elektrisch isolierend eingebettet ist. In den hohlen Gießharzkörper 3 ist ein Spaltrohr 4 mit insbesondere strammem Schiebesitz passend eingesetzt. Das Spaltrohr 4 hat in Fig. 1 gesehen an seinem linken Ende einen nach innen ragenden Flansch 5 und an seinem rechten Ende einen nach außen ragenden Flansch 6.

Der Flansch 5 des Spaltrohres 4 steht an der in der Zeichnung linken Seiten einer elastischen Dichtscheibe 7 an, die mit ihrer in der Zeichnung linken Seiten an einer Schulter im Innern des Gießharzkörpers 3 anliegt. Auf der in der Zeichnung rechten Seite der elastischen Dichtscheibe 7 befindet sich eine insbesondere aus Edelstahl bestehende metallische Verbindungsscheibe 8. Der in der Zeichnung linke Teil des Gießharzkörpers 3, die elastische Dichtscheibe 7 und die Verbindungsscheibe 8 sind von einem rückwärtigen Lagerträger 9 durchsetzt, der im Gießharzkörper 3 wie dargestellt durch nach außen stehende Bunde formschlüssig oder durch Einpressen kraftschlüssig gehalten ist, wobei der in der Zeichnung rechte Bund die Verbindungsscheibe 8 hält. Im Lagerträger 9 ist ein rückwärtiges Lager 10 untergebracht und in diesen Träger ist auch eine Verschlußschraube 11 eingeschraubt. Der Spalt zwischen der Verschlußschraube 11 und dem Lagerträger 9 ist durch einen Dichtring 12 abgedichtet.

Auf der in der Zeichnung rechten Seite ist in das Spaltrohr 4 ein im Querschnitt U-förmiger vorderer Lagerträger 13 eingesetzt, der eine Reihe von koaxialen Bohrungen aufweist und ein vorderes Lager 15 aufnimmt. Zwischen einer in der Zeichnung rechts von dem vorderen Lagerträger 13 angeordneten topfförmigen Trennwand 16, deren Außenumfang gewellt ausgebildet ist, ist ein Filterring 17 eingesetzt, dessen äußerer Durchmesser etwa dem äußeren Durchmesser des vorderen Lagerträgers 13 und der Trennwand 16 entspricht und dessen innerer Durchmesser etwa bis zu dem Bereich der Bohrungen 14 reicht.

Die Lager 10 und 13 dienen zum Lagern einer Rotorwelle 18, die einen zwischen den Lagern angeordneten Rotor 19 trägt, der an seiner in der Zeichnung rechten Seite eine Anlaufscheibe 20 aufweist, mit welcher er an dem vorderen Lager 15 ansteht. Die Rotorwelle 18 steht über die Trennwand 16 axial über und trägt an ihrem freien Ende einen als Pumpenrad ausgebildeten Treibkörper 21. Der Treibkörper ist von einem nur teilweise dargestellten Anschlußgehäuse 22 umgeben, dessen in der Zeichnung linker Rand in eine Ringnut des Gießharzkörpers 3 eingreift und dadurch in radialer Richtung festgelegt ist. Ein nach innen ragender Bund 23 des Anschlußgehäuses 22 liegt an einer elastischen Dichtscheibe 24 an, die sich in radialer Richtung bis zum Spaltrohr 5 erstreckt, dessen vorderer Flansch 6 auf der in der Zeichnung rechten Seite der Dichtscheibe 24 anliegt. Das Anschlußgehäuse 22 ist mittels - schraubenförmigen Verbindungsmitteln 25, welche einen über den Gießharzkörper 3 überstehedn Teil des Statorblechpaketes 1 durchsetzen, mit diesem verbunden. Das Statorblechpaket 1 ist im wesentlichen quadratisch ausgebildet, wodurch gegenüber dem im Querschnitt kreisförmigen Gießharzkörper 3 überstehende Ecken vorhanden sind, welche von den Verbindungsmitteln 25 durchsetzt werden. Die konzentrische Anordnung der Ringnut zum Zentrieren des Anschlußgehäuses 22 und des Hohlraumes zur Aufnahme des Spaltrohres 4 am Gießkörper ist durch deren Gießform vorgegeben.

Das in den Gießharzkörper 3 eingesetzte Spaltrohr 4 wird von dem rückwärtigen Lagerträger 9 über die Verbindungsscheibe 8 im Gießharzkörper 3 gehalten. Es ist kürzer als der Abstand zwischen der linken Seite der Dichtscheibe 7 und der rechten Seite der Dichtscheibe 24, jeweils in nicht zusammengedrücktem Zustand, so daß der nach innen stehende Flansch 5 und der nach außen stehende Flansch 6 des Spaltrohres 4 die Dichtscheiben 7 und 24 an ihren dem Spaltrohr benachbarten Rändern zusammenpressen, wodurch eine Dichtwirkung erzielt wird. Der Außendurchmesser der Dichtscheibe 7 ist nicht größer als der Innendurchmesser der Dichtscheibe 24, so daß beide in einem Arbeitsgang aus einer einzigen ebenen Platte ausgestanzt werden können.

Der Motor ist von einem insbesondere aus Kunststoff bestehenden, über den Gießharzkörper 3 und das Statorblechpaket 1 geschobenen Motorgehäuse 26 umgeben, das im Querschnitt im wesentlichen quadratisch ausgebildet ist und abgeschrägte Ecken aufweist. An das Motorgehäuse 26 ist ein Anschlußkasten 27 angeformt, in dem sich eine einstückig damit verbundene Steckerleiste 29 befindet. Der Anschlußkasten 27 ist nach oben durch einen Anschlußkastendeckel 28 abgeschlossen. Das Motorgehäuse 26 ist an seinem in Fig. 1 linken Ende mit einem Lagerdeckel 30 abgeschlossen. Es hat auf seiner in Fig. 1 rechten Seite radial nach innen stehende Augen 31, die in Fig. 5 genauer dargestellt und in Fig. 1 nur teilweise und versetzt gezeichnet sind. Das Motorgehäuse 26 ist mittels schraubenförmiger Verbindungsmittel 32, welche das Statorblechpaket 1 durchsetzen und in die Augen 31 eingeschraubt sind, mit dem Statorblechpaket 1 verbunden. Das Motorgehäuse 26 weist nach innen stehende Rippen 32 auf, welche in entsprechende Nuten im Gießharzkörper 3 eingreifen. Der Lagerdeckel 30 ist mittels in den Gießharzkörper 3 eingeschraubter Schrauben 35 gesichert. In den Anschlußkasten 27 sind von der Wicklung stammende Drähte 36 geführt und mit der Steckerleiste 29 elektrisch leitend verbunden.

Während des Betriebes der Spaltrohrmotorpumpe fließt Flüssigkeit vom Anschlußgehäuse 22 über eine Spalte zwischen der Trennwand 16 und dem Spaltrohr 4 über den Filterring 17 und die Bohrungen 14 im vorderen Lagerträger 13 in den Innenraum des Spaltrohres 4, in welchem sich der Rotor 19 befindet. Um das vordere Lager 15 bildet sich durch die rotierende Anlaufscheibe 20 ein Schmierkreislauf. Durch das Lagerspiel zwischen der Rotorwelle 18 und dem rückwärtigen Lager 10 fließt Flüssigkeit hindurch und gelangt über die hohle Rotorwelle 18, in welcher sich eine Düse oder Drosselstelle befindet durch die Mitte des Treibkörpers 21 wieder in das Anschlußgehäuse 22, so daß sich ein Schmierkreislauf ergibt.

Die Spaltrohrmotorpumpe nach den zweiten Ausführungsbeispiel entspricht im wesentlichen der des ersten Ausführungsbeispiels, so daß bei gleichen Teilen gleiche Bezugszeichen verwendet werden, wobei Bezugszeichen von Teilen die gegenüber dem ersten Ausführungsbeispiel geändert sind der Buchstabe a beigefügt ist. Bei dem zweiten Ausführungsbeispiel fehlt das Motorgehäuse 26. Der Anschlußkasten 27a sitzt dieses' beiderseitig mittels Verbindungsteilen übergreifend auf dem Statorblechpaket 1 und ist mittels diese Verbindungsteile durchsetzender Schrauben 32 mit dem Blechpaket 1 verbunden. Die in Fig. 6 linke Seite des Gießharzkörpers 3 ist durch eine bis zum Statorblechpaket 1 reichende Haube 37 abgedeckt, die mittels nicht dargestellter Schrauben mit dem Gießharzkörper 3 verbunden ist. Der Gießharzkörper 3 ist auf seiner in Fig. 6 rechten Seite von dem Anschlußgehäuse 2 abgedeckt, wobei die Verschlußschraube 11 wie beim ersten Ausführungsbeispiel ohne Abnahme der Haube 37 bzw. des Lagerdeckels 30 zugänglich ist.

Anstelle eines als Pumpenrad für eine Flüssigkeitspumpe ausgebildeten Treibkörpers 21 kann auch ein anderer Treibkörper, z.B. ein Lüfterrad, ein Pumpenrad einer Vakuumpumpe oder dgl., verwendet werden.

## Ansprüche

1. Elektromotor, insbesondere Spaltrohrmotor, mit einem Statorblechpaket (1), mit einer das Statorblechpaket durchsetzenden und in einen Gießharzkörper (3) eingebetteten Wicklung (2), wobei das Statorblechpaket (1) den Gießharzkörper (3) mindestens teilweise radial überragt, und mit einem Anschlüßgehäuse (22) zur Unterbringung eines motorbetriebenen Treibkörpers (21), das am Gießharzkörper (3) radial und axial ansteht und mittels Verbindungsmitteln (25) mit dem Statorblechpaket (1) verbunden ist, dadurch **gekennzeichnet,** daß die Verbindungsmittel (25) in den den Gießharzkörper (3) überragenden Teilen des Statorblechpaketes (1) untergebracht sind.

2. Elektromotor nach Anspruch 1, dadurch **gekennzeichnet,** daß mit dem radial überstehenden Teil des Statorblechpaketes (1) ein Anschlußkasten (27) oder ein einen Anschlußkasten (27) aufweisendes Motorgehäuse (26) verbunden ist, wobei der Anschlußkasten eine Steckerleiste (29) aufweist.

3. Elektromotor nach Anspruch 2, dadurch **gekennzeichnet,** daß der Anschlußkasten (27) und die Steckerleiste (29) einstückig ausgebildet sind.

4. Elektromtor nach einem der vorhergehenden Ansprüche, dadurch **gekennzeichnet,** daß die den Gießharzkörper (3) überragenden Teile des Statorblechpaketes (1) Ecken eines mehreckigen Statorbleches sind.

Fig.1

Fig.2

Fig.3

Fig.4

26

27

1   3

29

18

36

30

25   22

Fig.6

28

29

C

27a

32

3

37   1

Fig.5

3

30

32   1   26

Fig.7

28

27a

25

25

32

1

32

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 721 280 (DILLS) * Spalte 1, Zeile 71 - Spalte 2, Zeile 20; Spalte 3, Zeilen 4-36; Figur * | 1 | H 02 K 1/18 H 02 K 5/22 H 02 K 5/128 |
| Y | | 2,4 | |
| | --- | | |
| Y | FR-A-1 517 088 (MOTEURS DROUARD) * Seite 2, linke Spalte, Zeile 34 - Seite 2, rechte Spalte, Zeile 10; Figuren 3,4 * | 4 | |
| | --- | | |
| Y | DE-C- 857 093 (SIEMENS-SCHUCKERT) * Seite 2, Zeilen 26-45; Figuren 1-3 * | 2 | |
| | --- | | |
| A | DE-A-3 445 137 (HALM) * Seite 5, Zeile 19 - Seite 6, Zeile 34; Figuren 1-6 * | 2,3 | |
| | ------ | | |

RECHERCHIERTE SACHGEBIETE (Int. Cl.4)

H 02 K

**Der vorliegende Recherchenbericht wurde für alle Patentansprüche erstellt**

| Recherchenort | Abschlußdatum der Recherche | Prüfer |
|---|---|---|
| DEN HAAG | 14-06-1988 | TIO K.H. |